# EUROPEAN PATENT APPLICATION

(11) **EP 4 645 573 A1**
(43) Date of publication of application: **05.11.2025**
(21) Application number: 23910973.9
(22) Date of filing: 29.12.2023
(51) Int. Cl.: H01M 50/502, H01M 50/543

(54) **ELECTRICAL CONNECTION ASSEMBLY, BATTERY ASSEMBLY AND VEHICLE**

(30) Priority: 30.12.2022 CN 202211724588
(71) Applicant: BYD Company Limited, Shenzhen, Guangdong 518118 (CN)
(72) Inventor: TAN, Liangwen, Shenzhen, Guangdong 518118 (CN); WANG, Jun, Shenzhen, Guangdong 518118 (CN); TAN, Jing, Shenzhen, Guangdong 518118 (CN)
(74) Representative: Mathys & Squire
(86) International application number: PCT/CN2023/143452
(87) International publication number: WO 2024/141060

(57) **Abstract**

An electrical connection assembly, a battery assembly and a vehicle. The electrical connection assembly comprises an electrical connector and an insulating member, wherein the electrical connector is used for connecting a plurality of battery cells; and the insulating member is arranged on the electrical connector and protrudes out of the side of the electrical connector which is away from the battery cells.

## Description

### CROSS-REFERENCE TO RELATED APPLICATIONS

The present disclosure claims priority to and benefits of Chinese Patent Application No. 202211724588.6, filed on December 30, 2022. The entire content of the above-referenced applications is incorporated herein by reference.

### FIELD

The present disclosure belongs to the technical field of battery structures, and specifically, the present disclosure relates to an electrical connection assembly, a battery assembly, and a vehicle.

### BACKGROUND

In the related art, to ensure an endurance capability of a power battery system, a plurality of battery cores are usually connected in series to form a battery assembly. The plurality of battery cores are usually electrically connected to each other by connection sheets.

However, because the battery assembly is usually placed in a metal housing, during the use of the battery assembly, the connection sheet is under high-voltage conditions, and the electrical connection sheet may release a high voltage to nearby electric conductors, causing electrical leakage.

### SUMMARY

Embodiments of the present disclosure aim to provide a new technical solution of an electrical connection assembly, a battery assembly, and a vehicle.

According to a first aspect of the embodiments of the present disclosure, an electrical connection assembly is provided, and the electrical connection assembly includes: an electrical connection member, the electrical connection member being configured to connect a plurality of battery cores; and an insulating member, the insulating member being arranged on the electrical connection member, and the insulating member protruding out of a side of the electrical connection member which is away from the battery core.

Optionally, in a thickness direction of the electrical connection assembly, a thickness of the insulating member is greater than or equal to a thickness of the electrical connection member.

Optionally, the insulating member includes a first insulating piece arranged along an edge of the electrical connection member, and a second insulating piece protruding out of a surface of the electrical connection member on the side which is away from the battery core.

Optionally, the second insulating piece is provided with an avoidance hole, and the avoidance hole is configured for the electrical connection member to be electrically connected to a sampling circuit.

Optionally, the insulating member further includes a third insulating piece, and the third insulating piece protrudes out of a side of the electrical connection member which is close to the battery core.

Optionally, the electrical connection member is provided with a fixing hole, and the fixing hole is configured to connect to the battery core.

According to a second aspect of the embodiments of the present disclosure, a battery assembly is provided, including a plurality of battery cores, a housing, and the electrical connection assembly according to the first aspect, and the electrical connection assembly and the plurality of battery cores are arranged in the housing; and the plurality of battery cores are arranged in parallel, the plurality of battery cores are connected in series or in parallel by the electrical connection assembly, and a part of the insulating member protruding out of the side of the electrical connection member which is away from the battery core separates the electrical connection member from the housing.

Optionally, the plurality of battery cores are stacked along a preset direction, the battery core is provided with a terminal, the battery core has two side surfaces oppositely arranged along the preset direction, one of the two side surfaces is provided with a groove, and the terminal is arranged in the groove, or the terminal is arranged on the other of the two side surfaces.

Optionally, the terminal includes a positive terminal and a negative terminal, and the electrical connection member includes at least one first connection sheet and at least one second connection sheet; and a positive terminal of one of at least two adjacent battery cores is connected to a negative terminal of the other of the at least two adjacent battery cores by a first connection sheet corresponding to the positive terminal and a second connection sheet corresponding to the negative terminal.

In some embodiments, the first connection sheet includes a first connection piece and a second connection piece that are arranged in a bending manner and that are connected; the second connection sheet includes a third connection piece and a fourth connection piece that are arranged in a bending manner and that are connected; and the third connection piece is arranged on a side of the first connection piece in a thickness direction, where the third connection piece and the first connection piece are adhered to each other and connected by a fastener, and the second connection piece and the fourth connection piece are oppositely arranged.

Optionally, the electrical connection assembly further includes a fastener, the first connection piece is provided with a first through-hole, and the third connection piece is provided with a second through-hole; and when the first connection piece and the third connection piece are adhered to each other, the first through-hole corresponds to and communicates with the second through-hole, and the fastener is inserted in the first through-hole and the second through-hole, to fix the first connection piece and the third connection piece.

Optionally, the first connection piece is provided with the fastener, and the third connection piece is provided with a third through-hole; and when the first connection piece and the third connection piece are adhered to each other, the fastener is inserted in the third through-hole, to fix the first connection piece and the third connection piece.

Optionally, the insulating member includes a first insulating member arranged on a peripheral side of the first connection sheet and a second insulating member arranged on a peripheral side of the second connection sheet, the first insulating member protrudes out of a side of the first connection sheet which is away from a corresponding battery core, and the second insulating member protrudes out of a side of the second connection sheet which is away from a corresponding battery core.

According to a third aspect of the embodiments of the present disclosure, a vehicle is further provided, including the battery assembly according to the second aspect.

A technical effect of the embodiments of the present disclosure is as follows.

The electrical connection assembly provided in the present disclosure includes an electrical connection member and an insulating member, and the electrical connection assembly is configured to connect a plurality of battery cores. When the electrical connection assembly is placed in the housing, because the insulating member protrudes out of the side of the electrical connection member which is away from the battery core, a part of the insulating member protruding out of a surface of the electrical connection member separates the electrical connection member from the housing, and the electrical connection member does not directly contact an inner wall of the housing, thereby reducing a possibility of electric leakage.

In addition, when being impacted by an external force, the housing easily deforms under the external force. The housing may first be in contact with the insulating member, and the insulating member may absorb the external force, thereby reducing the external force of impact on the electrical connection member. In other words, the insulating member has a good buffer function, thereby improving stability and safety of the electrical connection assembly during use.

Other features and advantages of the present disclosure will become apparent from the following detailed description of exemplary embodiments of the present disclosure with reference to the accompanying drawings.

### BRIEF DESCRIPTION OF THE DRAWINGS

Accompanying drawings are incorporated into and constitute a part of this specification, show embodiments of the present disclosure, and are used together with this specification to describe the principle of the present disclosure.
FIG. 1 is a first structural diagram of a battery assembly according to a first embodiment of the present disclosure;
FIG. 2 is a second structural diagram of a battery assembly according to a first embodiment of the present disclosure;
FIG. 3 is a first structural diagram of an electrical connection assembly according to a first embodiment of the present disclosure;
FIG. 4 is a first structural diagram of a positive connection member according to a first embodiment of the present disclosure;
FIG. 5 is a second structural diagram of a positive connection member according to a first embodiment of the present disclosure;
FIG. 6 is a first structural diagram of a second connection member according to a first embodiment of the present disclosure;
FIG. 7 is a second structural diagram of a second connection member according to a first embodiment of the present disclosure;
FIG. 8 is a first structural diagram of a battery assembly according to a second embodiment of the present disclosure;
FIG. 9 is a second structural diagram of a battery assembly according to a second embodiment of the present disclosure;
FIG. 10 is a first structural diagram of an electrical connection assembly according to a second embodiment of the present disclosure;
FIG. 11 is a second structural diagram of an electrical connection assembly according to a second embodiment of the present disclosure;
FIG. 12 is a first structural diagram of a first connection sheet according to a second embodiment of the present disclosure;
FIG. 13 is a second structural diagram of a first connection sheet according to a second embodiment of the present disclosure;
FIG. 14 is a first structural diagram of a second connection sheet according to a second embodiment of the present disclosure;
FIG. 15 is a second structural diagram of a second connection sheet according to a second embodiment of the present disclosure;
FIG. 16 is a third structural diagram of a battery core and an electrical connection assembly according to a second embodiment of the present disclosure; and
FIG. 17 is a schematic diagram of a structure of a vehicle according to an embodiment of the present disclosure.

In the drawings:
400. Vehicle; 200. Battery assembly; 100. Electrical connection assembly;
1. Battery core; 10. Groove; 11. Positive terminal; 12. Negative terminal;
2. Electrical connection member; 20. Fixing hole; 21. Positive connection member; 22. First connection member; 23. Second connection member; 24. Third connection member; 25. Negative connection member; 26. First connection sheet; 261. First connection piece; 2610. First through-hole; 262. Second connection piece; 27. Second connection sheet; 271. Third connection piece; 2710. Second through-hole; 2711. Third through-hole; 272. Fourth connection piece; 28. Fastener;
3. Insulating member; 30. Avoidance hole; 31. First insulating piece; 32. Second insulating piece; 33. First insulating member; 34. Second insulating member; 35. Third insulating piece;
4. Sampling circuit; 5. Housing; 6. Cover plate; 7. Positive tab; and 8. Negative tab.

### DETAILED DESCRIPTION

Various exemplary embodiments of the present disclosure are now described in detail with reference to the accompanying drawings. It should be noted that, unless otherwise specified, opposite arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and application or use of the present disclosure.

Technologies, methods, and devices known to those of ordinary skill in related arts may not be discussed in detail, but where appropriate, the techniques, the methods, and the devices should be considered as a part of the specification.

In all examples shown and discussed herein, any specific value should be construed as merely exemplary and not as limitations. Therefore, other examples of exemplary embodiments may have different values.

It should be noted that, similar numerals and letters indicate similar items in the following accompanying drawings. Therefore, once an item is defined in one accompanying drawing, the item does not need to be further discussed in the subsequent accompanying drawings.

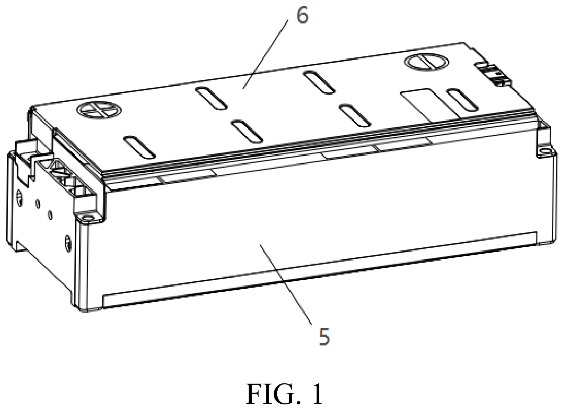

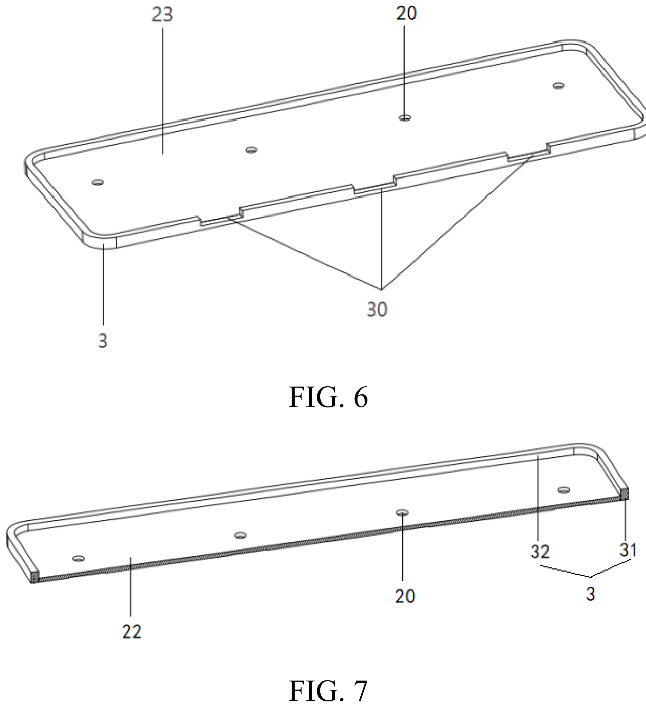

Referring to FIG. 1 to FIG. 16, an embodiment of the present disclosure discloses an electrical connection assembly 100. The electrical connection assembly 100 includes an electrical connection member 2 and an insulating member 3. The electrical connection member 2 is configured to connect to a plurality of battery cores 1, for example, the electrical connection member 2 is configured to connect to terminals of the plurality of battery cores 1. The insulating member 3 is arranged on the electrical connection member 2, and the insulating member 3 protrudes out of a side of the electrical connection member 2 which is away from the battery core 1. Optionally, the electrical connection member 2 is configured to connect a plurality of adjacent battery cores 1; and in the descriptions of the present disclosure, "a plurality of" means at least two.

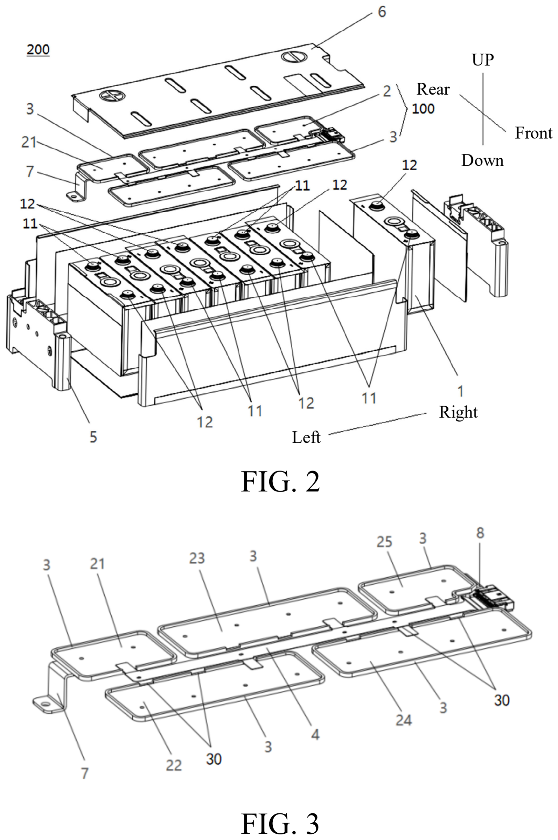

Referring to FIG. 2, the electrical connection assembly 100 includes an electrical connection member 2 and an insulating member 3 arranged on the electrical connection member 2.

The electrical connection member 2 is arranged corresponding to terminals of a plurality of battery cores 1. The electrical connection member 2 is made of metal materials such as aluminum or other materials. The electrical connection member 2 is fixedly connected to the terminal through welding or other manner, and electric connection between the electrical connection member 2 and the terminal is used to implement electrical connection among the plurality of battery cores 1. It should be noted that, the electrical connection among the plurality of battery cores 1 includes a parallel connection, and certainly also includes a series connection.

A side of the electrical connection member 2 which is close to the battery core 1 is fixedly connected to the terminal, and the insulating member 3 protrudes out of a side of the electrical connection member 2 which is away from the battery core 1.

That is, there is a height difference between a surface of the electrical connection member 2 on the side which is away from the battery core 1 and the insulating member 3, and a step structure is formed between the surface of the electrical connection member 2 on the side which is away from the battery core 1 and the insulating member 3.

The insulating member 3 may be made of insulating materials such as rubber. Therefore, the insulating member 3 isolates the electrical connection member 2, to reduce a case in which during use of the battery assembly 200, because the electrical connection member 2 is under high-voltage conditions, the electrical connection member 2 releases high voltage to nearby electric conductors, causing electrical leakage.

By using this structure, when the electrical connection assembly 100 disclosed in the present disclosure is placed in a housing 5, a side of the electrical connection member 2 is connected to the battery core 1, and a side of the electrical connection member 2 far away from the battery core 1 is close to the housing 5. Because the insulating member 3 protrudes out of the side of the electrical connection member 2 which is away from the battery core 1, a part of the insulating member 3 protruding out of the side of the electrical connection member 2 separates the electrical connection member 2 from the housing 5, and the electrical connection member 2 does not directly contact an inner wall of the housing 5, thereby reducing a possibility of electric leakage of the battery core 1.

In addition, when being impacted by an external force, the housing 5 easily deforms under the external force. The housing 5 may first be in contact with the insulating member 3, and the insulating member 3 may absorb the external force, thereby reducing the external force of impact on the electrical connection member 2. In other words, the insulating member 3 has a good buffer function, thereby improving stability and safety of the electrical connection member 2 during use.

For example, the insulating member 3 is arranged at an edge position of the electrical connection member 2, that is, the insulating member 3 is arranged along the edge position of the electrical connection member 2. The electrical connection member 2 is a metal member having a particular thickness. The insulating member 3 is connected to a side wall of the electrical connection member 2. The electrical connection member 2 is arranged inside the insulating member 3. Certainly, arrangement of the insulating member 3 is not limited to this as long as the insulating member 3 protrudes out of the side of the electrical connection member 2 which is away from the battery core 1.

In some embodiments, in a thickness direction (that is, an up-down direction in FIG. 2) of the electrical connection assembly 100, a thickness of the insulating member 3 is greater than or equal to a thickness of the electrical connection member 2, to improve use reliability of the insulating member 3 and improve connection reliability between the insulating member 3 and the electrical connection member 2.

In some embodiments of the present disclosure, the insulating member 3 includes a first insulating piece 31 arranged along an edge of the electrical connection member 2, and a second insulating piece 32 protruding out of a surface of the electrical connection member 2 on the side which is away from the battery core 1.

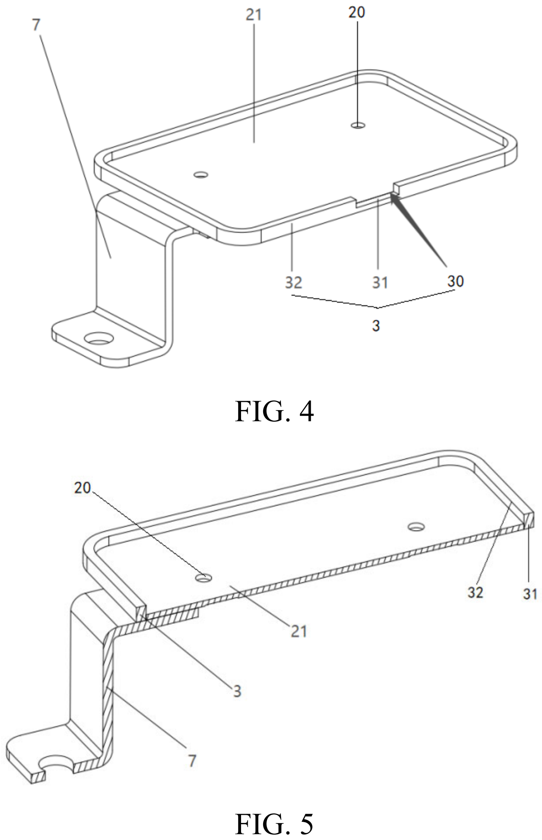

Referring to FIG. 3 and FIG. 4, the insulating member 3 includes a first insulating piece 31 and a second insulating piece 32. The first insulating piece 31 is arranged around an edge contour of the electrical connection member 2, and the first insulating piece 31 is fixedly connected to a side wall edge of the electrical connection member 2. The first insulating piece 31 is set to be, for example, ring-shaped.

The second insulating piece 32 and the first insulating piece 31 are, for example, integrally connected to each other. The second insulating piece 32 protrudes out of the surface of the electrical connection member 2 on the side which is away from the battery core 1. A step structure is formed between the second insulating piece 32 and the surface of the electrical connection member 2.

It should be noted that, the second insulating piece 32 may fully cover the first insulating piece 31, that is, the second insulating piece 32 fully overlaps the first insulating piece 31. Certainly, the second insulating piece 32 may alternatively partially cover the first insulating piece 31. For example, the second insulating pieces 32 may be provided as at least three, the plurality of second insulating pieces 32 being spaced apart in a mounting region, and the three second insulating pieces 32 may form a plane.

It can be seen that, regardless of whether the second insulating piece 32 fully covers the first insulating piece 31, when the electrical connection member 2 is placed in the housing 5, in a thickness direction of the electrical connection member 2, the second insulating piece 32 forms a spacer between the electrical connection member 2 and an inner wall of the housing 5. When the housing 5 is impacted by an external force, the insulating member 3 has a good buffer function, thereby improving stability and safety of the electrical connection member 2 during use.

In some embodiments of the present disclosure, the second insulating piece 32 is provided with an avoidance hole 30, and the avoidance hole 30 is configured for the electrical connection member 2 to be electrically connected to a sampling circuit 4.

Referring to FIG. 2 and FIG. 3, to facilitate real-time monitoring of a voltage at an electrical connection position of each battery core 1, the electrical connection assembly 100 is usually externally connected to the sampling circuit 4, that is, a flexible sampling circuit.

An electrical connection is implemented between the sampling circuit 4 and the electrical connection member 2 by a metal sheet such as a Ni sheet. The second insulating piece 32 is provided with an avoidance hole 30. There is at least one avoidance hole 30, and the avoidance hole 30 is configured to be passed through by the metal sheet, to implement a connection between the electrical connection member 2 and the sampling circuit 4.

In this embodiment of the present disclosure, the insulating member 3 further includes a third insulating piece 35, and the third insulating piece 35 protrudes out of a side of the electrical connection member 2 which is close to the battery core 1.

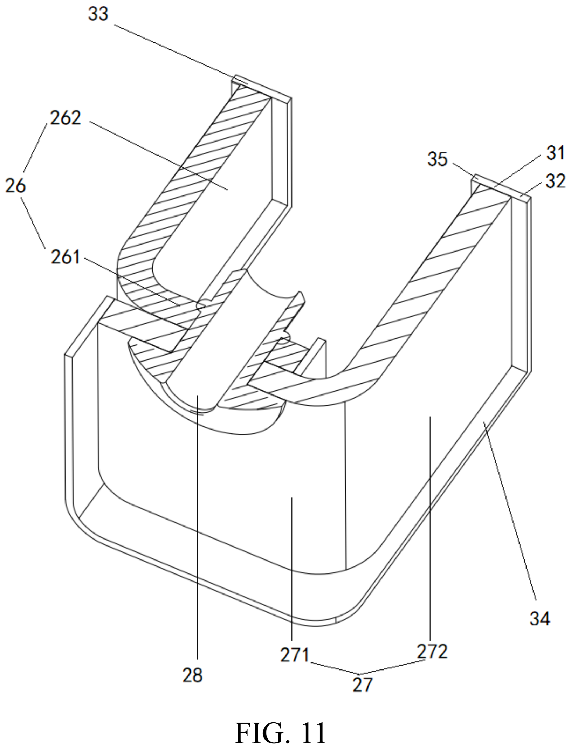

Referring to FIG. 11, the insulating member 3 includes the first insulating piece 31, the second insulating piece 32, and the third insulating piece 35 that are integrally connected. The first insulating piece 31 is connected to the electrical connection member 2. The second insulating piece 32 is arranged on a side of the electrical connection member 2 which is away from a corresponding battery core 1, and the third insulating piece 35 is arranged on a side of the electrical connection member 2 which is close to a corresponding battery core 1. The corresponding battery cores 1 respectively refer to battery cores 1 connected to the electrical connection member 2.

In some embodiments of the present disclosure, the electrical connection member 2 is provided with a fixing hole 20, and the fixing hole 20 is configured to connect to the battery core 1.

Referring to FIG. 5 to FIG. 7, the electrical connection member 2 is provided with the fixing hole 20. The fixing hole 20 extends through the electrical connection member 2 along the thickness direction of the electrical connection member 2. The fixing hole 20 is configured to accommodate a terminal of the battery core 1, to implement a mechanical connection and an electrical connection between the electrical connection member 2 and the battery core.

An embodiment of the present disclosure further discloses a battery assembly 200, including the foregoing electrical connection assembly 100 and a plurality of battery cores 1. The plurality of battery cores 1 are arranged in parallel, the battery core 1 is provided with a terminal on a surface perpendicular to a stacking direction of the plurality of battery cores 1, and the plurality of battery cores 1 are connected in series or in parallel by the electrical connection assembly 100.

Referring to FIG. 1 to FIG. 7, an embodiment of the present disclosure discloses a battery assembly 200, for example, a VDA battery module. The battery assembly 200 includes a plurality of battery cores 1 arranged in parallel. The battery core 1 is provided with a terminal. The terminal may be arranged on a non-stack surface of the battery core 1. Certainly, the terminal may also be arranged on a stack surface of the battery core 1.

In an embodiment of the present disclosure, the terminal is arranged on the non-stack surface of the battery core 1, that is, the terminal is arranged on a surface perpendicular to a stacking direction of a plurality of battery cores 1. Specifically, the plurality of battery cores 1 are arranged in parallel, side walls of adjacent battery cores 1 are adhered to each other, and the terminal may be arranged at the top or the bottom of the battery core 1. Certainly, the terminal may alternatively be arranged on other side walls of the battery cores 1 that are not stacked.

In a specific embodiment of the present disclosure, referring to FIG. 1 and FIG. 2, the battery assembly 200 includes eight battery cores 1, and a terminal is arranged at the top of the battery core 1. Each two of the eight battery cores 1 are one group, to obtain four groups in total. Positive terminals and negative terminals of each group of battery cores 1 are arranged at a same direction, and positive terminals and negative terminals of two adjacent groups of battery cores 1 are arranged at opposite directions.

Still referring to FIG. 2, the electrical connection member 2 is arranged above the terminal, and the electrical connection member 2 is fixedly connected to the terminal through welding or other manner. In addition, the electrical connection member 2 is made of metal materials such as aluminum. Therefore, when the electrical connection member 2 is fixedly connected to the terminal, an electrical connection between the electrical connection member 2 and the terminal can be implemented. The electrical connection member 2 is arranged corresponding to terminals of at least two adjacent battery cores 1, so that electrical connection between the at least two adjacent battery cores 1 can be implemented. There are five electrical connection members 2. Two battery cores 1 in each group are connected in parallel by the electrical connection member 2, and two adjacent groups of battery cores 1 are connected in series by the electrical connection member 2. Therefore, the eight battery cores 1 form two parallel and four series power supply circuits by using the five electrical connection members 2.

Referring to FIG. 3 to FIG. 7, the insulating member 3 includes a first insulating piece 31 arranged on a peripheral side of the electrical connection member 2, and a second insulating piece 32 arranged on a side of the first insulating piece 31 which is away from the terminal. A lower surface of the electrical connection member 2 is fixedly connected to the terminal. The second insulating piece 32 protrudes out of an upper surface of the electrical connection member 2, and a step structure is formed between the second insulating piece 32 and the upper surface of the electrical connection member 2.

It should be noted that, the second insulating piece 32 may be, for example, arranged around the electrical connection member 2, and the second insulating piece 32 fully covers the first insulating piece 31, as shown in FIG. 3. Certainly, the second insulating piece 32 may alternatively partially cover only the first insulating piece 31.

Referring to FIG. 2, the terminal includes a positive terminal 11 and a negative terminal 12, and the battery assembly 200 sequentially includes, from left to right, a first group of battery cores, a second group of battery cores, a third group of battery cores, and a fourth group of battery cores. A positive terminal 11 of the first group of battery cores at the leftmost side is arranged at the rear of the battery core 1 in FIG. 2, and a negative terminal 12 is arranged at the front of the battery core 1 in FIG. 2. A positive terminal 11 of the second group of battery cores is arranged at the front of the battery core 1 in FIG. 2, and a negative terminal 12 is arranged at the rear of the battery core 1 in FIG. 2. An arrangement direction of terminals of the third group of battery cores is the same as that of the first group of battery cores, and an arrangement direction of terminals of the fourth group of battery cores is the same as that of the second group of battery cores.

Referring to FIG. 2 and FIG. 3, the plurality of electrical connection members 2 include a positive connection member 21, a first connection member 22, a second connection member 23, a third connection member 24, and a negative connection member 25 through which a power supply stream passes in sequence.

The positive connection member 21 is fixedly connected to two positive terminals 11 at the rear of the first group of battery cores 1; the first connection member 22 is fixedly connected to two negative terminals 12 at the front of the first group of battery cores 1 and two positive terminals 11 at the front of the second group of battery cores 1; the second connection member 23 is fixedly connected to two negative terminals 12 at the rear of the second group of battery cores 1 and two positive terminals 11 at the rear of the third group of battery cores 1; the third connection member 24 is fixedly connected to two negative terminals 12 at the front of the third group of battery cores 1 and two positive terminals 11 at the front of the fourth group of battery cores 1; and the negative connection member 25 is fixedly connected to two negative terminals 12 at the rear of the fourth group of battery cores 1.

Optionally, the battery assembly 200 further includes a housing 5, a cover plate 6, a positive tab 7, and a negative tab 8.

Referring to FIG. 2, the battery assembly 200 includes the housing 5. A cavity for accommodating the battery core 1 is provided inside the housing 5, and the top of the housing 5 is provided with an opening. The battery core 1 is placed inside the housing 5, and a terminal is arranged at the top of the battery core 1. The electrical connection member 2 is arranged above the terminal and is fixedly connected to the terminal. The cover plate 6 covers the electrical connection member 2 and is connected to the housing 5, and an accommodating space for accommodating the battery core 1 and the electrical connection member 2 is formed between the cover plate 6 and the housing 5.

Referring to FIG. 3 to FIG. 5, the positive connection member 21 is fixedly connected to the positive tab 7, one end of the positive tab 7 is adhered to and fixedly connected to a lower surface of the positive connection member 21, and the other end of the positive tab 7 extends through the housing 5 to an outer side of the housing 5.

Similarly, a structure of the negative tab 8 is the same as that of the positive tab 7. The negative tab 8 is fixedly connected to the negative connection member 25. One end of the negative tab 8 is adhered to and fixedly connected to a lower surface of the negative connection member 25, and the other end of the negative tab 8 extends through the housing 5 to the outer side of the housing 5.

An embodiment of the present disclosure provides a battery assembly 200, specifically, for example, a VDA battery module. A terminal is arranged on a non-stack surface of a battery core such as the top of a battery core 1, and an electrical connection member 2 is fixedly connected to a terminal of the battery core 1. An insulating member 3 includes a first insulating piece 31 arranged on a peripheral side of the electrical connection member 2, and a second insulating piece 32 protruding out of a surface of the electrical connection member 2 on a side which is away from the battery core 1. The first insulating piece 31 performs insulation protection on the electrical connection member 2, and the second insulating piece 32 is arranged on a side of the electrical connection member 2 which is away from the battery core 1 in a thickness direction. This does not affect a fixed connection between the electrical connection member 2 and the battery core 1. In addition, when the battery assembly 200 is impacted by an external force, the insulating member 3 has a good buffer function, thereby improving stability and safety of the electrical connection member 2 during use.

An embodiment of the present disclosure further discloses a battery assembly 200, including a plurality of battery cores 1, a housing 5, and the foregoing electrical connection assembly 100. The electrical connection assembly 100 and the plurality of battery cores 1 are arranged in the housing 5, the plurality of battery cores 1 are arranged in parallel, and the plurality of battery cores 1 are connected in series or in parallel by the electrical connection assembly 100. A part of the insulating member 3 protruding out of the side of the electrical connection member 2 which is away from the battery core 1 separates the electrical connection member 2 from the housing 5. It should be noted that, in this embodiment of the present disclosure, the battery assembly 200 may be a battery module or a battery package.

Therefore, the electrical connection member 2 does not directly contact an inner wall of the housing 5, thereby reducing a possibility of electric leakage of the battery core 1. When being impacted by an external force, the housing 5 easily deforms under the external force. The housing 5 may first be in contact with the insulating member 3, and the insulating member 3 may absorb the external force, thereby reducing the external force of impact on the electrical connection member 2. In other words, the insulating member 3 has a good buffer function, thereby improving stability and safety of the electrical connection member 2 during use.

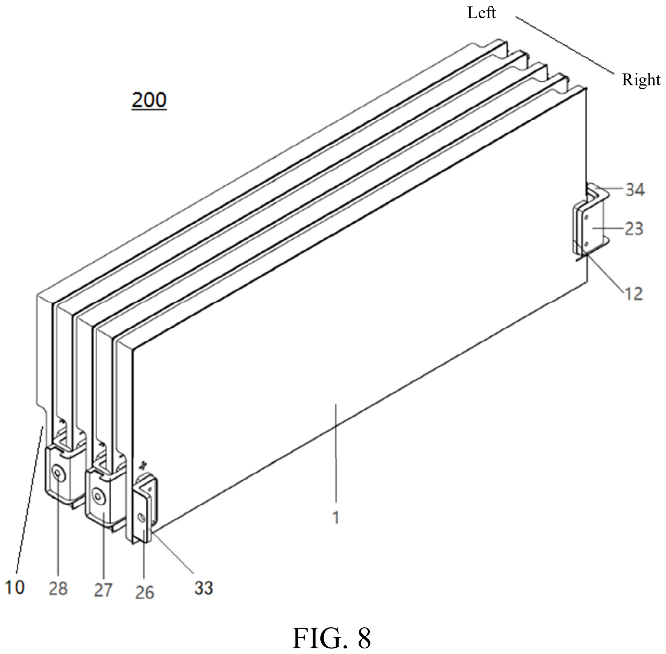

Referring to FIG. 8 to FIG. 16, an embodiment of the present disclosure further discloses a battery assembly 200, including a plurality of battery cores 1. The plurality of battery cores 1 are arranged in parallel, and the plurality of battery cores 1 are connected in series or in parallel by an electrical connection assembly 100.

Specifically, the battery core 1 is provided with a terminal, and the terminal is arranged on a stacked surface of the battery core 1. As shown in FIG. 8, the battery core 1 includes a first surface and a second surface oppositely arranged. The first surface of the battery core 1 is stacked on a second surface of an adjacent battery core 1, and the second surface of the battery core 1 is stacked on a first surface of an adjacent battery core 1. The terminal is arranged on the first surface of the battery core. The terminal includes a positive terminal 11 and a negative terminal 12. The positive terminal 11 and the negative terminal 12 are, for example, distributed on two ends of the first surface of the battery core 1.

The electrical connection assembly 100 is electrically connected to the terminal. The electrical connection assembly 100 includes an electrical connection member 2 and an insulating member 3. One end of the electrical connection member 2 is electrically connected to the positive terminal 11, and the other end of the electrical connection member 2 is electrically connected to the negative terminal 12. A specific structure of the electrical connection assembly 100 is not limited in the present disclosure.

In this embodiment of the present disclosure, the plurality of battery cores 1 are stacked along a preset direction (for example, a left-right direction in FIG. 8), the battery core 1 is provided with a terminal, the battery core 1 has two side surfaces oppositely arranged along the preset direction, one of the two side surfaces is provided with a groove 10, and the terminal is arranged in the groove, or the terminal is arranged on the other of the two side surfaces. The battery core 1 is provided with the groove 10 on a surface of a stacked side, the battery core 1 is provided with a terminal, and the terminal is arranged in the groove 10 or arranged on a surface of a side which is away from the groove 10. In other words, the plurality of battery cores 1 are stacked along the preset direction, and the battery core 1 is provided with the groove 10 on a surface of one of two sides in the preset direction. In this case, the terminal of the battery core 1 is arranged in the groove 10, or the terminal of the battery core 1 is arranged on a surface of the battery core 1 on a side which is away from the groove 10.

Referring to FIG. 8, the first surface of the battery core 1 is provided with the terminal, the second surface of the battery core 1 is provided with the groove 10, and when the plurality of battery cores 1 are stacked, the terminal arranged on the battery core 1 is arranged in a groove 10 on an adjacent battery core 1.

Certainly, the first surface of the battery core 1 may be provided with the groove 10 and the terminal. In this case, the terminal of the battery core 1 is arranged in the groove 10.

Certainly, both the first surface and the second surface of the battery core 1 may be provided with the groove 10, and the terminal of the battery core 1 is arranged in the groove 10 of the first surface or arranged in the groove 10 of the second surface.

In some embodiments of the present disclosure, the terminal includes a positive terminal 11 and a negative terminal 12, and the electrical connection member 2 includes at least one first connection sheet 26 and at least one second connection sheet 27. A positive terminal 11 of one of at least two adjacent battery cores 1 is connected to a negative terminal 12 of the other of the at least two adjacent battery cores 1 by a first connection sheet 26 corresponding to the positive terminal 11 and a second connection sheet 27 corresponding to the negative terminal 12, to implement series connection of the at least two adjacent battery cores 1.

In some embodiments, the first connection sheet 26 includes a first connection piece 261 and a second connection piece 262 that are arranged in a bending manner and that are connected, and the second connection sheet 27 includes a third connection piece 271 and a fourth connection piece 272 that are arranged in a bending manner and that are connected. The third connection piece 271 is arranged on a side of the first connection piece 261 in a thickness direction. The third connection piece 271 and the first connection piece 261 are adhered to each other and connected, and the second connection piece 262 and the fourth connection piece 272 are oppositely arranged.

The first connection sheet 26 includes the first connection piece 261 and the second connection piece 262 that are integrally connected, and the first connection piece 261 and the second connection piece 262 form a bending structure. The second connection sheet 27 includes the third connection piece 271 and the fourth connection piece 272 that are integrally connected, and the third connection piece 271 and the fourth connection piece 272 form a bending structure. The second connection sheet 27 is arranged on a side of the first connection sheet 26 in a thickness direction, where the third connection piece 271 and the first connection piece 261 are adhered to each other and connected by a fastener 28, and the second connection piece 262 and the fourth connection piece 272 are oppositely arranged.

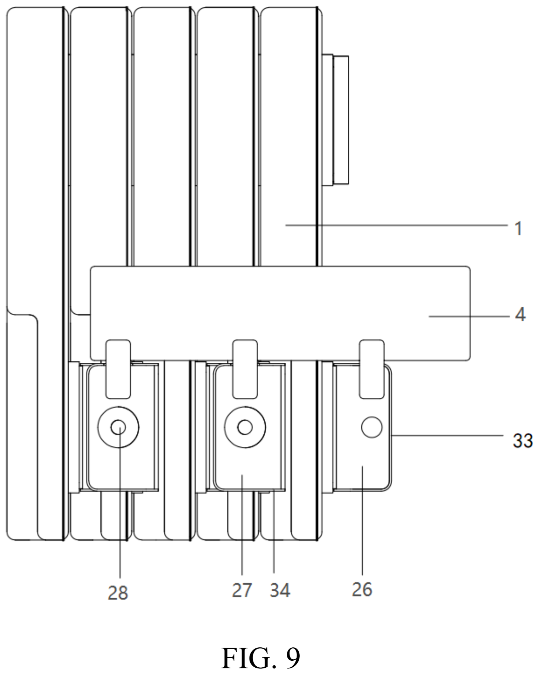

Referring to FIG. 8 and FIG. 9, the terminal includes a positive terminal 11 and a negative terminal 12, and the positive terminal 11 and the negative terminal 12 are respectively arranged at two side wall positions of the battery core 1. In a same side direction of the terminals, the positive terminal 11 and the negative terminal 12 are arranged in a staggered manner. That is, on a same side wall, two adjacent battery cores 1 respectively have a positive terminal 11 and a negative terminal 12.

The electrical connection member 2 includes a first connection sheet 26 connected to the positive terminal 11, and a second connection sheet 27 connected to the negative terminal 12.

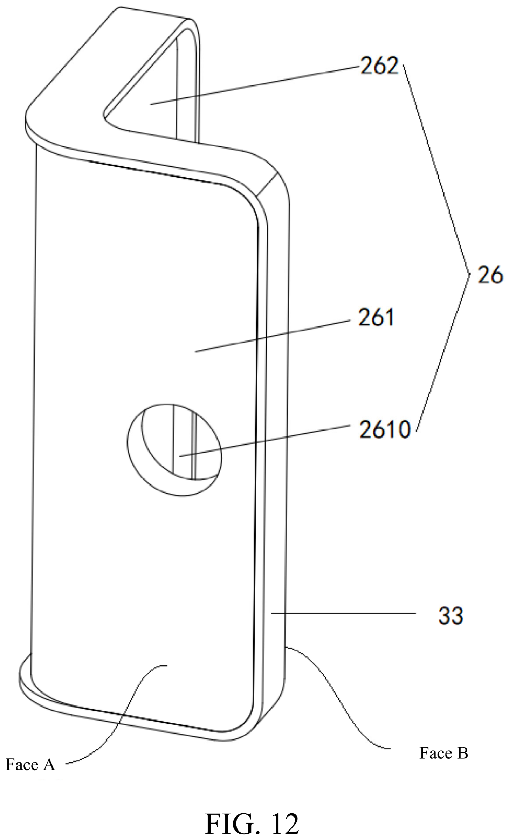

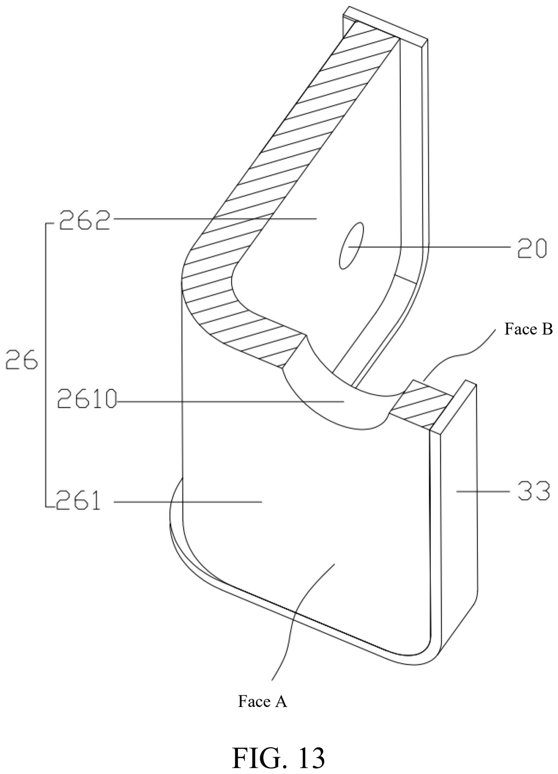

Referring to FIG. 12 and FIG. 13, the first connection sheet 26 includes a first connection piece 261 and a second connection piece 262 that are integrally connected, and the first connection piece 261 and the second connection piece 262 form a bending structure. A bending angle between the first connection piece 261 and the second connection piece 262 is, for example, 90 degrees, and certainly, may also be set to another angle. The second connection piece 262 and the positive terminal 11 are connected by, for example, a bolt, to realize a fixed connection between the first connection sheet 26 and the positive terminal 11.

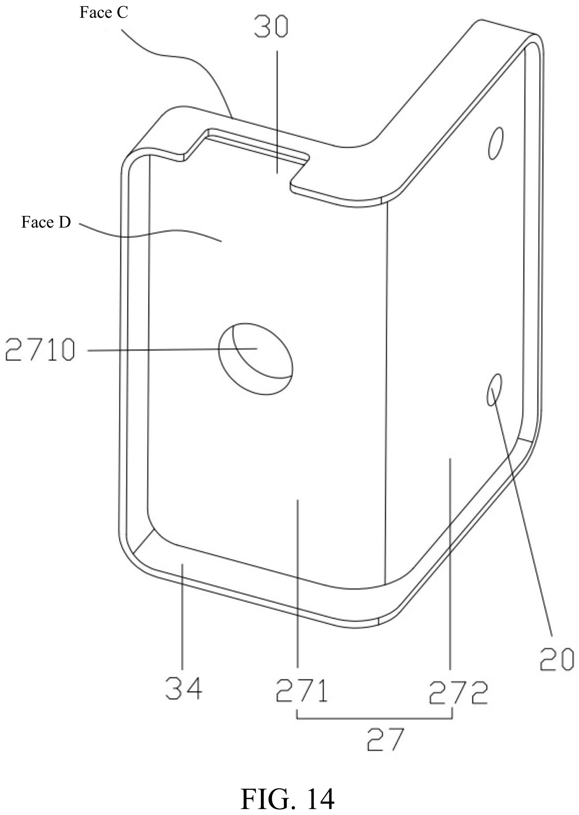

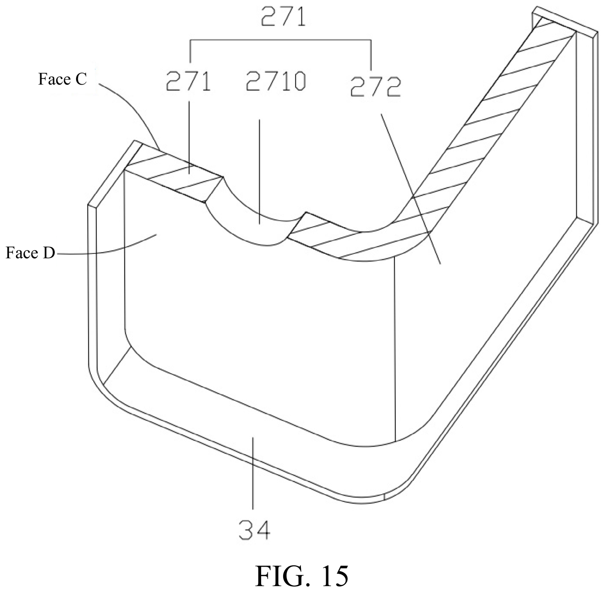

Referring to FIG. 14 and FIG. 15, the second connection sheet 27 includes a third connection piece 271 and a fourth connection piece 272 that are integrally connected, and the third connection piece 271 and the fourth connection piece 272 form a bending structure. A bending angle between the third connection piece 271 and the fourth connection piece 272 is, for example, 90 degrees, and certainly, may also be set to another angle. The fourth connection piece 272 and the negative terminal 12 are connected by, for example, a bolt, to realize a fixed connection between the second connection sheet 27 and the negative terminal 12.

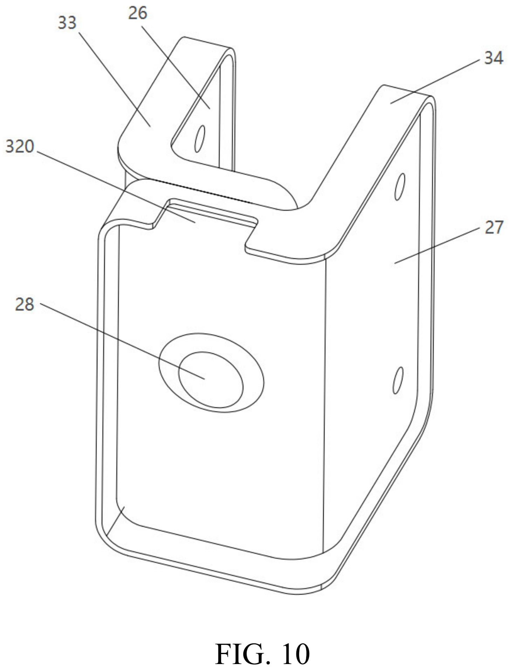

Referring to FIG. 10 and FIG. 11, the third connection piece 271 is arranged on a side of the first connection piece 261 in a thickness direction, where the first connection piece 261 and the third connection piece 271 are adhered to each other and connected by a fastener 28, and the fastener 28 is, for example, a rivet. The second connection piece 262 and the fourth connection piece 272 are oppositely arranged. When a bending angle between the first connection sheet 26 and the second connection sheet 27 is 90 degrees, the second connection piece 262 and the fourth connection piece 272 are arranged in parallel.

Referring to FIG. 10 and FIG. 11, the first connection piece 261, the second connection piece 262, the third connection piece 271, and the fourth connection piece 272 enclose an accommodating space having an opening on a side, where the opening side faces the battery core 1.

In the related art, a fixed connection between electrical connection members 2 is usually implemented through welding. During processing, the electrical connection member 2 needs to be supported by using auxiliary tooling. In addition, because a welding position is inside the electrical connection member 2 on a side which is close to the battery core 1, it is easy to produce virtual welding and affect stability of electric connection.

However, in the battery assembly 200 provided in the present disclosure, the terminal is arranged at a side wall position of the battery core 1. To facilitate series connection among a plurality of battery cores 1, the electrical connection member 2 includes a first connection sheet 26 and a second connection sheet 27, and the first connection sheet 26 and the second connection sheet 27 are fixedly connected by a fastener 28, for example, a rivet. Compared with the related art, a fixing manner of the electrical connection member 2 in the present disclosure is more convenient, and the connection is tighter, thereby improving stability of series connection among the battery cores 1, reducing processing difficulty, and improving processing precision.

In this embodiment of the present disclosure, the electrical connection assembly 100 further includes a fastener 28, the first connection piece 261 is provided with a first through-hole 2610, and the third connection piece 271 is provided with a second through-hole 2710; and when the first connection piece 261 and the third connection piece 271 are adhered to each other, that is, when a face A of the first connection piece 261 in FIG. 12 is adhered to a face C of the third connection piece 271 in FIG. 14, the first through-hole 2610 corresponds to and communicates with the second through-hole 2710. The fastener 28 is inserted in the first through-hole 2610 and the second through-hole 2710, to rivet and fix the first connection piece 261 and the third connection piece 271.

In an embodiment of the present disclosure, referring to FIG. 12, a first connection piece 261 is provided with a first through-hole 2610, and the first through-hole 2610 extends through the first connection piece 261 along a thickness direction of the first connection piece 261.

Referring to FIG. 14, a third connection piece 271 is provided with a second through-hole 2710, and the second through-hole 2710 extends through the third connection piece 271 along a thickness direction of the third connection piece 271.

As shown in FIG. 11, when the first connection piece 261 and the third connection piece 271 are adhered to each other, that is, when a face A of the first connection piece 261 in FIG. 12 is adhered to a face C of the third connection piece 271 in FIG. 14, the first through-hole 2610 corresponds to and communicates with the second through-hole 2710. The fastener 28 is inserted in the first through-hole 2610 and the second through-hole 2710, and the fastener 28 is, for example, a rivet, to rivet and fix the first connection piece 261 and the third connection piece 271.

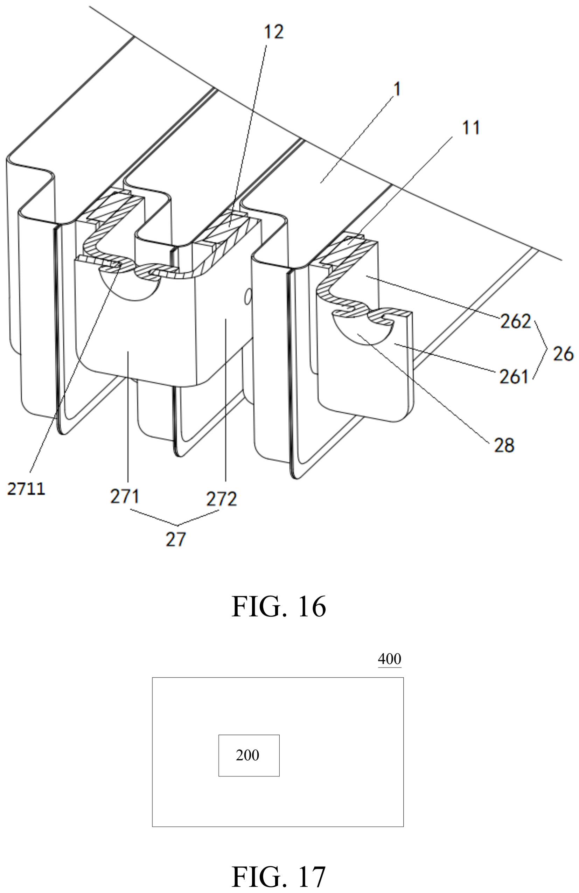

In this embodiment of the present disclosure, referring to FIG. 16, the first connection piece 261 is provided with the fastener 28, and the third connection piece 271 is provided with a third through-hole 2711; and when the first connection piece 261 and the third connection piece 271 are adhered to each other, that is, when a face A of the first connection piece 261 in FIG. 12 is adhered to a face C of the third connection piece 271 in FIG. 14, the fastener 28 is inserted in the third through-hole 2711, to rivet and fix the first connection piece 261 and the third connection piece 271.

In another embodiment of the present disclosure, referring to FIG. 16, the first connection piece 261 is fixedly connected to a fastener 28, the fastener 28 is, for example, a rivet, and the first connection piece 261 and the fastener 28 are connected through welding or integral forming. A third connection piece 271 is provided with a third through-hole 2711, and the third through-hole 2711 extends through the third connection piece 271 along a thickness direction of the third connection piece 271.

As shown in FIG. 11, when the first connection piece 261 and the third connection piece 271 are adhered to each other, that is, when a face A of the first connection piece 261 in FIG. 12 is adhered to a face C of the third connection piece 271 in FIG. 14, the fastener 28 is inserted in the third through-hole 2711, and pressing rivet is performed on the fastener 28, so that the first connection piece 261 and the third connection piece 271 are riveted and fixed.

In this embodiment of the present disclosure, an insulating member 3 includes a first insulating member 33 arranged on a peripheral side of the first connection sheet 26 and a second insulating member 34 arranged on a peripheral side of the second connection sheet 27. The first insulating member 33 is arranged around an outer peripheral edge of the first connection sheet 26, and the second insulating member 34 is arranged around an outer peripheral edge of the second connection sheet 27, so that the first insulating member 33 and the second insulating member 34 may be in a roughly ring-like structure. It can be understood that the ring-like structure corresponding to the first insulating member 33 and the second insulating member 34 may be a flat ring shape or a space ring shape. The first insulating member 33 protrudes out of a side of the first connection sheet 26 which is away from a corresponding battery core 1, where the corresponding battery core 1 is a battery core 1 connected to the first connection sheet 26. The second insulating member 34 protrudes out of a side of the second connection sheet 27 which is away from a corresponding battery core 1, where the corresponding battery core 1 is a battery core 1 connected to the second connection sheet 27.

Referring to FIG. 10 and FIG. 11, a first insulating member 33 is arranged on a peripheral side of the first connection sheet 26, and a second insulating member 34 is arranged on a peripheral side of the second connection sheet 27. In a thickness direction of the first connection sheet 26, a part of the first insulating member 33 protrudes out of surfaces of two sides of the first connection sheet 26, and the other part of the first insulating member 33 protrudes out of only a surface of the first connection sheet 26 on a side which is away from the second connection sheet 27 in the thickness direction of the first connection sheet 26. In a thickness direction of the second connection sheet 27, a part of the second insulating member 34 protrudes out of surfaces of two sides of the second connection sheet 27, and the other part of the second insulating member 34 protrudes out of only a side of the second connection sheet 27 which is away from the first connection sheet 26 in the thickness direction of the second connection sheet 27. For example, the first connection sheet 26 includes a first connection piece 261 and a second connection piece 262, the second connection sheet 27 includes a third connection piece 271 and a fourth connection piece 272, and the first connection piece 261 is adhered to the third connection piece 271. In a thickness direction of the first connection piece 261, a part of the first insulating member 33 arranged at the first connection piece 261 protrudes out of only a surface of the first connection piece 261 on a side which is away from the third connection piece 271. In a thickness direction of the third connection piece 271, a part of the second insulating member 34 arranged at the third connection piece 271 protrudes out of only a surface of the third connection piece 271 on a side which is away from the first connection piece 261. In a thickness direction of the second connection piece 262, a part of the first insulating member 33 arranged at the second connection piece 262 protrudes out of surfaces of two sides of the second connection piece 262, and a part of the second insulating member 34 arranged at the fourth connection piece 272 protrudes out of surfaces of two sides of the fourth connection piece 272.

In addition, in a thickness direction of an overlapped part of the first connection sheet 26 and the second connection sheet 27, that is, in a thickness direction of the first connection piece 261 and the third connection piece 271, a part that is of the second insulating member 34 and that corresponds to the third connection piece 271 is arranged on a side of the first insulating member 33 which is away from the battery core 1. In this case, the third connection piece 271 is arranged on a side of the first connection piece 261 which is away from the battery core 1. Certainly, the second insulating member 34 may alternatively be arranged on a side of the first insulating member 33 which is close to the battery core 1. In this case, the third connection piece 271 is arranged on a side of the first connection piece 261 facing the battery core 1.

In this embodiment of the present disclosure, the battery assembly 200 further includes a sampling circuit 4, the electrical connection member 2 is electrically connected to the sampling circuit 4, the insulating member 3 is provided with an avoidance hole 30, and the avoidance hole 30 is configured for the electrical connection member 2 to be electrically connected to the sampling circuit 4.

Referring to FIG. 9 and FIG. 10, the first connection piece 261 of the first connection sheet 26 overlaps the third connection piece 271 of the second connection sheet 27, and in a thickness direction of the overlapped part, the third connection piece 271 is arranged on a side of the first connection piece 261 which is away from the battery core 1.

The sampling circuit 4 is electrically connected to the second connection sheet 27, the second insulating member 34 is provided with an avoidance hole 30, and at least one avoidance hole 30 is provided. The avoidance hole 30 is configured for the second connection sheet 27 to be electrically connected to the sampling circuit 4, to implement real-time monitoring on a voltage of the battery core 1.

The present disclosure further provides a vehicle 400, including the foregoing battery assembly 200.

Although some specific embodiments of the present disclosure have been described in detail by using examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of the present disclosure is subject to the appended claims.

## Claims

1. An electrical connection assembly (100), wherein the electrical connection assembly comprises:
an electrical connection member (2), the electrical connection member (2) being configured to connect a plurality of battery cores (1); and
an insulating member (3), the insulating member (3) being arranged on the electrical connection member (2), and the insulating member (3) protruding out of a side of the electrical connection member (2) which is away from the battery core (1).

2. The electrical connection assembly (100) according to claim 1, wherein in a thickness direction of the electrical connection assembly, a thickness of the insulating member (3) is greater than or equal to a thickness of the electrical connection member (2).

3. The electrical connection assembly (100) according to claim 1 or 2, wherein the insulating member (3) comprises a first insulating piece (31) arranged along an edge of the electrical connection member (2), and a second insulating piece (32) protruding out of a surface of the electrical connection member (2) on the side which is away from the battery core (1).

4. The electrical connection assembly (100) according to claim 3, wherein the second insulating piece (32) is provided with an avoidance hole (320), and the avoidance hole (320) is configured for the electrical connection member (2) to be electrically connected to a sampling circuit (4).

5. The electrical connection assembly (100) according to claim 3 or 4, wherein the insulating member (3) further comprises a third insulating piece (35), and the third insulating piece (35) protrudes out of a side of the electrical connection member (2) which is close to the battery core (1).

6. The electrical connection assembly (100) according to any one of claims 1 to 5, wherein the electrical connection member (2) is provided with a fixing hole (20), and the fixing hole (20) is configured to connect to the battery core (1).

7. A battery assembly (200), wherein the battery assembly (200) comprises a plurality of battery cores (1), a housing (5), and the electrical connection assembly (100) according to any one of claims 1 to 6, and the electrical connection assembly (100) and the plurality of battery cores (1) are arranged in the housing (5); and
the plurality of battery cores (1) are arranged in parallel, the plurality of battery cores (1) are connected in series or in parallel by the electrical connection assembly (100), and a part of the insulating member (3) protruding out of the side of the electrical connection member (2) which is away from the battery core (1) separates the electrical connection member (2) from the housing (5).

8. The battery assembly (200) according to claim 7, wherein the plurality of battery cores (1) are stacked along a preset direction, the battery core (1) is provided with a terminal, the battery core (1) has two side surfaces oppositely arranged along the preset direction, one of the two side surfaces is provided with a groove (10), and the terminal is arranged in the groove (10), or the terminal is arranged on the other of the two side surfaces.

9. The battery assembly (200) according to claim 7 or 8, wherein the terminal of the battery core (1) comprises a positive terminal (11) and a negative terminal (12), and the electrical connection member (2) comprises at least one first connection sheet (26) and at least one second connection sheet (27); and a positive terminal (11) of one of at least two adjacent battery cores (1) is connected to a negative terminal (12) of the other of the at least two adjacent battery cores (1) by a first connection sheet (26) corresponding to the positive terminal (11) and a second connection sheet (27) corresponding to the negative terminal (12).

10. The battery assembly (200) according to claim 9, wherein the first connection sheet (26) comprises a first connection piece (261) and a second connection piece (262) that are arranged in a bending manner and that are connected;
the second connection sheet (27) comprises a third connection piece (271) and a fourth connection piece (272) that are arranged in a bending manner and that are connected; and
the third connection piece (271) is arranged on a side of the first connection piece (261) in a thickness direction, wherein the third connection piece (271) and the first connection piece (261) are adhered to each other and connected, and the second connection piece (262) and the fourth connection piece (272) are oppositely arranged.

11. The battery assembly (200) according to claim 10, wherein the electrical connection assembly (100) further comprises a fastener (28), the first connection piece (261) is provided with a first through-hole (2610), and the third connection piece (271) is provided with a second through-hole (2710); and
when the first connection piece (261) and the third connection piece (271) are adhered to each other, the first through-hole (2610) corresponds to and communicates with the second through-hole (2710), and the fastener (28) is inserted in the first through-hole (2610) and the second through-hole (2710), to fix the first connection piece (261) and the third connection piece (271).

12. The battery assembly (200) according to claim 10, wherein the first connection piece (261) is provided with a fastener (28), and the third connection piece (271) is provided with a third through-hole (2711); and
when the first connection piece (261) and the third connection piece (271) are adhered to each other, the fastener (28) is inserted in the third through-hole (2711), to fix the first connection piece (261) and the third connection piece (271).

13. The battery assembly (200) according to any one of claims 10 to 12, wherein the insulating member (3) comprises a first insulating member (33) arranged on a peripheral side of the first connection sheet (26) and a second insulating member (34) arranged on a peripheral side of the second connection sheet (27), the first insulating member (33) protrudes out of a side of the first connection sheet (26) which is away from a corresponding battery core (1), and the second insulating member (34) protrudes out of a side of the second connection sheet (27) which is away from a corresponding battery core (1).

14. A vehicle, comprising the battery assembly (200) according to any one of claims 7 to 13.
